# EUROPEAN PATENT APPLICATION

(11) **EP 4 620 599 A1**
(43) Date of publication of application: **24.09.2025**
(21) Application number: 25164082.7
(22) Date of filing: 17.03.2025
(51) Int. Cl.: B22F 10/14, B08B 7/00, B22F 10/68, B22F 10/73, B29C 64/153, B29C 64/357, B29C 64/379, B33Y 30/00, B33Y 40/00, B33Y 40/20, B22F 12/82

(54) **AUTOMATED DE-POWDERING OF ADDITIVE MANUFACTURING BUILD**

(30) Priority: 20.03.2024 US 202463567727 P
(71) Applicant: General Electric Company, Cincinnati, Ohio 45215 (US)
(72) Inventor: RAABE, Benjamin H., West Chester 45069 (US); FEDYK, Glen Charles, Schenectady 12345 (US); KOENIG, Matthew Stuart, West Chester 45069 (US); TUBESING, Chris, West Chester 45069 (US); RUDLOFF, Ruediger German, West Chester 45069 (US); THOMPSON, Brian Thomas, West Chester 45069 (US); MURPHY, William Cosmo, West Chester 45069 (US); GRIFFIN, Darrell Vincent Jr., West Chester 45069 (US)
(74) Representative: Hafner & Kohl PartmbB

(57) **Abstract**

An automated de-powdering system comprises a separation station having a support structure configured to support a build box containing an additive manufacturing build. An actuator is configured to move at least a portion of the additive manufacturing build out of the build box and into a sleeve. A separation mechanism is configured to separate the portion of the additive manufacturing within the sleeve from a remainder of the additive manufacturing build. A de-powdering station includes a conveyor configured to convey the separated portion of the build away from the remaining portion of the build, and an agitation mechanism is configured to separate unbound powder build material from one or more objects of the portion while the portion is being conveyed by the conveyor.

## Description

### CROSS-REFERENCE TO RELATED APPLICATIONS

This application is a non-provisional application claiming the benefit of priority under 35 U.S.C. § 119(e) to U.S. Provisional Application No. 63/567,727, filed March 20, 2024, which is hereby incorporated by reference in its entirety.

### FIELD

The present disclosure generally pertains to additive manufacturing machines and systems, and more particularly, systems and methods for automated de-powdering of an additive manufacturing build.

### BACKGROUND

Three-dimensional objects may be additively manufactured using an additive manufacturing machine. One type of additive manufacturing is binder jetting. In binder jet additive manufacturing, a liquid binder is used to join particles of a powder to form a three-dimensional object. For example, a controlled pattern of the liquid binder is applied to successive layers of the powder in a powder bed such that the layers of the material adhere to one another to form a three-dimensional green part. Through subsequent processing (e.g., sintering), the three-dimensional green part can be formed into a finished three-dimensional part.

### BRIEF DESCRIPTION OF THE DRAWINGS

A full and enabling disclosure, including the best mode thereof, directed to one of ordinary skill in the art, is set forth in the specification, which makes reference to the appended figures, in which:
FIG. 1 schematically depicts an exemplary additive manufacturing system in accordance with an embodiment of the present disclosure.
FIG. 2 schematically depicts an exemplary automated de-powdering system in accordance with embodiments of the present disclosure.
FIG. 3 schematically depicts an exemplary additive manufacturing system with an integrated de-powdering system in accordance with embodiments of the present disclosure.
FIG. 4 schematically depicts another exemplary automated de-powdering system in accordance with embodiments of the present disclosure.
FIG. 5 schematically depicts another exemplary automated de-powdering system in accordance with embodiments of the present disclosure.
FIG. 6 schematically depicts another exemplary automated de-powdering system in accordance with embodiments of the present disclosure.
FIG. 7 depicts a method for automated de-powdering of an additive manufacturing build in accordance with an exemplary aspect of the present disclosure.
FIG. 8 is a block diagram depicting an example computing system according to example embodiments of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a," "an," and "the" include plural references unless the context clearly dictates otherwise.

The term "at least one of" in the context of, e.g., "at least one of A, B, or C" refers to only A, only B, only C, or any combination of A, B, and C.

As used herein, the terms "first," "second," and "third" may be used interchangeably to distinguish one component from another and are not intended to signify location or importance of the individual components.

The terms "coupled," "fixed," "attached to," and the like refer to both direct coupling, fixing, or attaching, as well as indirect coupling, fixing, or attaching through one or more intermediate components or features, unless otherwise specified herein.

The term "adjacent" as used herein with reference to two walls and/or surfaces refers to the two walls and/or surfaces contacting one another, or the two walls and/or surfaces being separated only by one or more nonstructural layers and the two walls and/or surfaces and the one or more nonstructural layers being in a serial contact relationship (i.e., a first wall/surface contacting the one or more nonstructural layers, and the one or more nonstructural layers contacting the a second wall/surface).

As used herein, the terms "additively manufactured" or "additive manufacturing techniques or processes" refer generally to manufacturing processes wherein successive layers of material(s) are provided on each other to "build-up," layer-by-layer, a three-dimensional component. The successive layers generally fuse together to form a monolithic component which may have a variety of integral sub-components. Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or manufacturing technology. For example, embodiments of the present disclosure may use layer-additive processes, layer-subtractive processes, or hybrid processes.

Suitable additive manufacturing techniques in accordance with the present disclosure include, for example, Fused Deposition Modeling (FDM), Selective Laser Sintering (SLS), 3D printing such as by inkjets, laser jets, and binder jets, Stereolithography (SLA), Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD), Digital Light Processing (DLP), Direct Selective Laser Melting (DSLM), Selective Laser Melting (SLM), Direct Metal Laser Melting (DMLM), and other known processes.

The additive manufacturing processes described herein may be used for forming components using any suitable material. For example, the material may be plastic, metal, concrete, ceramic, polymer, epoxy, photopolymer resin, or any other suitable material that may be in solid, liquid, powder, sheet material, wire, or any other suitable form or combinations thereof. More specifically, according to exemplary embodiments of the present subject matter, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, and nickel or cobalt based superalloys (e.g., those available under the name Inconel^{®} available from Special Metals Corporation). These materials are examples of materials suitable for use in the additive manufacturing processes described herein, and may be generally referred to as "additive materials."

In addition, one skilled in the art will appreciate that a variety of materials and methods for bonding those materials may be used and are contemplated as within the scope of the present disclosure. As used herein, references to "fusing" may refer to any suitable process for creating a bonded layer of any of the above materials. For example, if an object is made from polymer, fusing may refer to creating a thermoset bond between polymer materials. If the object is epoxy, the bond may be formed by a crosslinking process. If the material is ceramic, the bond may be formed by a sintering process. If the material is powdered metal, the bond may be formed by a melting or sintering process. One skilled in the art will appreciate that other methods of fusing materials to make a component by additive manufacturing are possible, and the presently disclosed subject matter may be practiced with those methods.

In addition, the additive manufacturing process disclosed herein allows a single component to be formed from multiple materials. Thus, the components described herein may be formed from any suitable mixtures of the above materials. For example, a component may include multiple layers, segments, or parts that are formed using different materials, processes, and/or on different additive manufacturing machines. In this manner, components may be constructed which have different materials and material properties for meeting the demands of any particular application. In addition, although the components described herein are constructed entirely by additive manufacturing processes, it should be appreciated that in alternate embodiments, all or a portion of these components may be formed via casting, machining, and/or any other suitable manufacturing process. Indeed, any suitable combination of materials and manufacturing methods may be used to form these components.

An exemplary additive manufacturing process will now be described. Additive manufacturing processes fabricate components using three-dimensional (3D) information, for example a three-dimensional computer model, of the component. Accordingly, a three-dimensional design model of the component may be defined prior to manufacturing. In this regard, a model or prototype of the component may be scanned to determine the three-dimensional information of the component. As another example, a model of the component may be constructed using a suitable computer aided design (CAD) program to define the three-dimensional design model of the component.

The design model may include 3D numeric coordinates of the entire configuration of the component including both external and internal surfaces of the component. For example, the design model may define the body, the surface, and/or internal passageways such as openings, support structures, etc. In one exemplary embodiment, the three-dimensional design model is converted into a plurality of slices or segments, e.g., along a central (e.g., vertical) axis of the component or any other suitable axis. Each slice may define a thin cross section of the component for a predetermined height of the slice. The successive cross-sectional slices together form the 3D component. The component is then "built-up" slice-by-slice, or layer-by-layer, until finished.

In this manner, the components described herein may be fabricated using the additive process, or more specifically each layer is successively formed, e.g., by fusing or polymerizing a plastic using laser energy or heat or by sintering or melting metal powder. For example, a particular type of additive manufacturing process may use an energy beam, for example, an electron beam or electromagnetic radiation such as a laser beam, to sinter or melt a powder material. Any suitable laser and laser parameters may be used, including considerations with respect to power, laser beam spot size, and scanning velocity. The build material may be formed by any suitable powder or material selected for enhanced strength, durability, and useful life, particularly at high temperatures.

Each successive layer may be, for example, between about 10 µm and 200 µm, although the thickness may be selected based on any number of parameters and may be any suitable size according to alternative embodiments. Therefore, utilizing the additive formation methods described above, the components described herein may have cross sections as thin as one thickness of an associated powder layer, e.g., 10 µm, utilized during the additive formation process.

**In** addition, utilizing an additive process, the surface finish and features of the components may vary as needed depending on the application. For example, the surface finish may be adjusted (e.g., made smoother or rougher) by selecting appropriate laser scan parameters (e.g., laser power, scan speed, laser focal spot size, etc.) during the additive process, especially in the periphery of a cross-sectional layer which corresponds to the part surface. For example, a rougher finish may be achieved by increasing laser scan speed or decreasing the size of the melt pool formed, and a smoother finish may be achieved by decreasing laser scan speed or increasing the size of the melt pool formed. The scanning pattern and/or laser power can also be changed to change the surface finish in a selected area.

Notably, in exemplary embodiments, several features of the components described herein were previously not possible due to manufacturing constraints. However, the present inventors have advantageously utilized current advances in additive manufacturing techniques to develop exemplary embodiments of such components generally in accordance with the present disclosure. While the present disclosure is not limited to the use of additive manufacturing to form these components generally, additive manufacturing does provide a variety of manufacturing advantages, including ease of manufacturing, reduced cost, greater accuracy, etc.

**In** this regard, utilizing additive manufacturing methods, even multi-part components may be formed as a single piece of continuous metal, and may thus include fewer sub-components and/or joints compared to prior designs. The integral formation of these multi-part components through additive manufacturing may advantageously improve the overall assembly process. For example, the integral formation reduces the number of separate parts that must be assembled, thus reducing associated time and overall assembly costs. Additionally, existing issues with, for example, leakage, joint quality between separate parts, and overall performance may advantageously be reduced.

Also, the additive manufacturing methods described above enable much more complex and intricate shapes and contours of the components described herein. For example, such components may include thin additively manufactured layers and unique fluid passageways with integral mounting features. **In** addition, the additive manufacturing process enables the manufacture of a single component having different materials such that different portions of the component may exhibit different performance characteristics. The successive, additive nature of the manufacturing process enables the construction of these novel features. As a result, the components described herein may exhibit improved functionality and reliability.

Unlike laser melting and laser sintering additive manufacturing techniques, which heat the material to consolidate and build layers of the material to form a printed part (e.g., metal or ceramic part), binder jetting uses a chemical binder to bond particles of the material into layers that form a green body of the printed part. As defined herein, the green body of the printed part is intended to denote a printed part that has not undergone heat treatment to remove the chemical binder. Chemical binding has been used in sand molding techniques to bond sand particles and form a sand mold that can be used to fabricate other parts. Similar to sand molding, in binder jet printing, the chemical binder is successively deposited into layers of powder to print the part. For example, the chemical binder (e.g., a polymeric adhesive) may be selectively deposited onto a powder bed in a pattern representative of a layer of the part being printed. Each printed layer may be cured (e.g., via heat, light, moisture, solvent evaporation, etc.) after printing to bond the particles of each layer together to form the green body part. After the green body part is fully formed, the chemical binder is removed during post-printing processes (e.g., debinding and sintering) to form a consolidated part. **In** certain post printing processes, the green body part may undergo a de-powdering process. The de-powdering process removes portions of the powder that have not been bound (e.g., adhered) by the chemical binder. However, de-powdering of the green body part is generally done before heat treating (e.g., pre-sintering) the green body part. Heat treating the green body part removes the chemical binder and builds handling strength. Therefore, during a de-powdering processes, the green body part may have insufficient handling strength and be susceptible to damage.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

The present disclosure generally provides an apparatus and technique for automated de-powdering of an additively manufactured three-dimensional object. In exemplary embodiments, the de-powdering apparatus includes a separation station where at least a portion of an additive manufacturing build is pushed out of a build box and separated from a remaining portion of the additive manufacturing build within the build box. The separated portion of the additive manufacturing build is transported along a sieve conveyor while one or more agitation mechanisms function to separate unbound powder build material from the three-dimensional object. Thus, exemplary embodiments of the present disclosure decrease the time required for de-powdering (e.g., compared to de-powdering performed manually) and can accommodate complex build orientations and objects. Embodiments of the de-powdering apparatus may also be integrated into an additive manufacturing machine such that portions of an additive manufacturing build may be separated and de-powdered during the printing process (e.g., while a remaining portion of the additive manufacturing build is being printed).

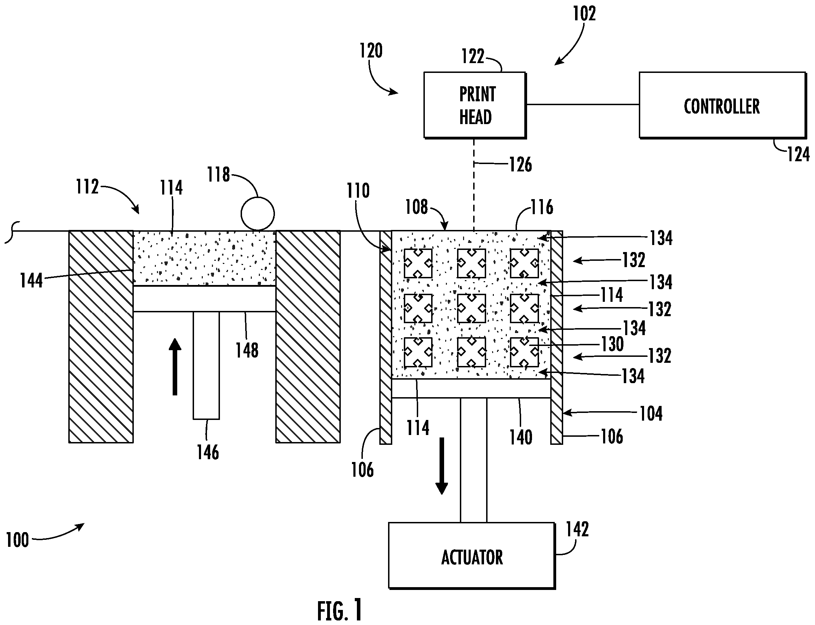

Referring now to FIG. 1, the presently disclosed subject matter will now be described in further detail. FIG. 1 schematically depicts an exemplary additive manufacturing system 100 according to the present disclosure. The additive manufacturing system 100 may include one or more additive manufacturing machines 102. In the illustrated embodiment, the additive manufacturing machine 102 comprises a binder jet additive manufacturing machine 102. In the illustrated embodiment, the additive manufacturing machine 102 includes a build box 104 defined by a plurality of sidewalls 106 and defining a build chamber 108 for an additive manufacturing build 110. The additive manufacturing machine 102 includes a powder source 112 configured to deposit one or more layers of a powder build material 114 onto a build surface 116 within the build box 104. For example, the powder source 112 includes a spreader or recoater 118 configured to be movable across the powder source 112 to spread one or more layers of the powder build material 114 onto the build surface 116.

In the illustrated embodiment, the additive manufacturing machine 102 includes a print system 120. For example, in the illustrated embodiment, the additive manufacturing machine 102 is configured for binder jet printing such that the print system 120 comprises at least one print head 122 movable across the build surface 116, and a controller 124 communicatively coupled to the print head 122 such that the print head 122 is configured to dispense a binder 126 to the one or more layers of the powder build material 114 (e.g., on the build surface 116). However, it should be understood that the print system 120 may comprise other types of components such as, by way or non-limiting example, a laser source, for transforming the powder build material 114 to additively manufacture the one or more objects 130. The controller 124 is configured to control the movement of the print head 122 and the delivery of the binder 126 in a defined two-dimensional pattern to form one or more three-dimensional parts or objects 130 on a layer-by-layer basis. As depicted in FIG. 1, the one or more objects 130 may be formed or delineated into one or more build layers 132 vertically stacked and nested with one or more foundation layers 134 disposed vertically adjacent or between the one or more build layers 132. The one or more build layers 132 include the one or more objects 130 suspended or disposed within the powder build material 114, and the one or more foundation layers 134 include the powder build material 114 being devoid of the one or more objects 130.

In FIG. 1, the build box 104 also comprises a build plate 140 defining a lower boundary of the build chamber 108. The build plate 140 is vertically movable within the build box 104 by an actuator 142. In operation, the actuator 142 lowers the build plate 140 incrementally as each layer of the powder build material 114 is distributed across the build surface 116.

In the illustrated embodiment, the powder source 112 comprises a supply chamber 144 containing a supply of the powder build material 114. A piston 146 may be actuatable to elevate a supply chamber plate 148 during operation of the additive manufacturing machine 102. As the supply chamber plate 148 is elevated, a portion of the powder build material 114 is forced out of the supply chamber 144, and the recoater 118 sequentially distributes thin layers of the powder build material 114 onto the build surface 116 above the build box 104.

As described above, binder jetting uses a chemical binder to bond particles of the powder build material 114 into layers that form a green body of the printed object 130. After printing, the object 130 may undergo additional processing, by way of non-limiting example, a cure process, a heat treatment process, or other type of post-printing process to dry the powder build material 114 or chemically activate or modify the binder. A de-powdering process is also performed to remove portions of the powder build material 114 that have not been bound (e.g., adhered) by the chemical binder (e.g., generally surrounding the green body of the printed object 130). Generally, de-powdering of the green body of the printed object 130 is generally done before heat treating (e.g., pre-sintering) of the green body of the printed object 130 to create a brown body part. Heat treating the green body to create a brown body part removes the chemical binder and builds handling strength. Therefore, during a de-powdering process, the green body of the printed object 130 may have insufficient handling strength and be susceptible to damage.

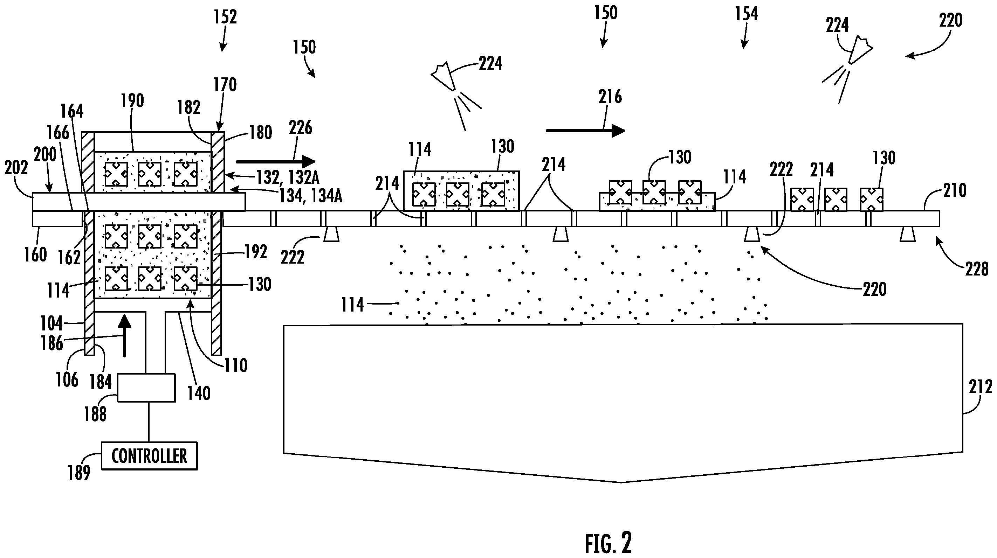

Referring to FIG. 2, FIG. 2 is a schematic diagram illustrating an automated de-powdering system 150 according to embodiments of the present disclosure. In the illustrated embodiment, the de-powdering system 150 includes a separation station 152 and a de-powdering station 154. The separation station 152 is configured to receive the build box 104 with the additive manufacturing build 110 within the build box 104 from the additive manufacturing machine 102 (FIG. 1). In exemplary embodiments, the separation station 152 includes a support structure 160 configured to receive the build box 104 with the additive manufacturing build 110 within the build box 104. In exemplary embodiments, the build box 104 may be fixedly secured to support structure 160 to support or maintain the build box 104 in a fixed position within the separation station 152. In exemplary embodiments, the support structure 160 defines an opening 162, and the build box 104 may be fixedly secured to the support structure 160 such that the additive manufacturing build 110 is positioned in alignment with the opening 162 to facilitate the additive manufacturing build 110 being inserted through the opening 162. In the illustrated embodiment, at least a portion of the build box 104 extends into the opening 162 such that an upper surface 164 of the build box 104 is disposed flush with an upper surface 166 of the support structure 160. However, it should be understood that the position of the build box 104 with respect to the support structure 160 may vary. Additionally, in exemplary embodiments, the additive manufacturing build 110 may be elevated or raised out of the build box 104 without the build box 104 being secured to the support structure 160. Thus, in exemplary embodiments, the build box 104, the additive manufacturing build 110, or both, may be aligned with the opening 162 such that the additive manufacturing build 110 may be inserted through the opening 162.

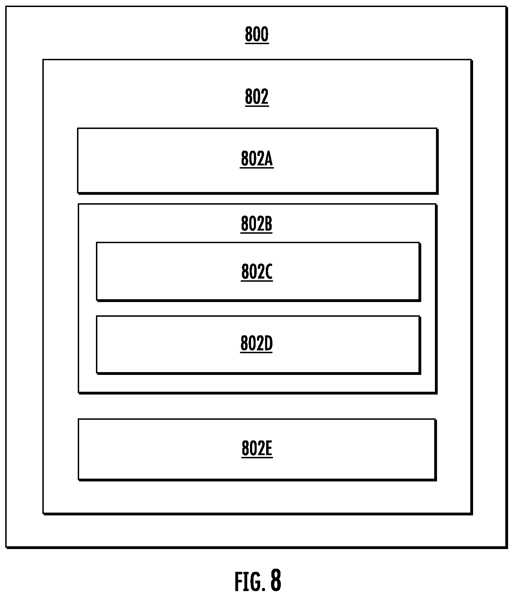

In exemplary embodiments, the separation station 152 also includes a sleeve 170 positionable over the opening 162. The sleeve 170 includes a plurality of sidewalls 180 defined such that interior surfaces 182 of the sidewalls 180 are disposed in substantial alignment with interior surfaces 184 of the sidewalls 106 of the build box 104. In operation, the build plate 140 is elevated in a direction 186 by an actuator 188 to elevate or raise the additive manufacturing build 110 such that at least a portion 190 of the additive manufacturing build 110 extends upwardly through the opening 162 and into the sleeve 170. Actuation or control of the actuator 188 may be automatically controlled, such as by a controller 189. The controller 189 may be configured similar to exemplary computing devices of the computing system 800 described below with reference to FIG. 8. It should be understood that the portion 190 may be a part of the additive manufacturing build 110 or the entire additive manufacturing build 110 depending on the size of the additive manufacturing build 110 or the placement of the one or more objects 130 within the additive manufacturing build 110. As illustrated in FIG. 2, the additive manufacturing build 110 is elevated such that at least one build layer 132A of the one or more build layers 132 is disposed above the upper surface 164 of the build box 104, above the upper surface 166 of the support structure 160, and resides within the sleeve 170. In exemplary embodiments, the additive manufacturing build 110 is elevated such that at least a portion of a foundation layer 134A of the one or more foundation layers 134 is positioned flush with or slightly above the upper surface 164 of the build box 104 and above the upper surface 166 of the support structure 160.

In exemplary embodiments, the separation station 152 also includes a separation mechanism 200 configured to separate the portion 190 of the additive manufacturing build 110 within the sleeve 170 from a portion 192 of the additive manufacturing build 110 remaining within the build box 104. In exemplary embodiments, the sleeve 170 is positioned slightly above the upper surface 166 of the support structure 160 to enable the separation mechanism 200 to be disposed between the sleeve 170 and the upper surface 166 of the support structure 160 (e.g., aligned with the foundation layer 134A). In exemplary embodiments, the separation mechanism 200 may comprise a cutting blade 202 insertable through the additive manufacturing build 110. Actuation and control of the separation mechanism 200 may be automatically controlled by the controller 189 or another computing system configured similar to exemplary computing devices of the computing system 800 described below with reference to FIG. 8. However, it should be understood that the separation mechanism 200 may also comprise one or more of a saw, a fluidization device (e.g., a nozzle or other type of fluid ejection mechanism configured to fluidize the powder build material 114) or other type of mechanism to separate the portion 190 of the additive manufacturing build 110 from the portion 192 of the additive manufacturing build 110 at the foundation layer 134A. In operation, the sleeve 170 stabilizes the portion 190 during the separation process. Further, in exemplary embodiments, the support structure 160 may be configured to position or align the additive manufacturing build 110 within the separation station 152 such that a portion of the additive manufacturing build 110 is aligned with the separation mechanism 200 (e.g., aligning one or more of the foundation layers 134 with the in alignment with the separation mechanism 200).

In FIG. 2, the de-powdering station 154 includes a conveyor 210 and a hopper 212. In exemplary embodiments, the conveyor 210 is disposed adjacent to the separation station 152 and is configured to receive a portion of the additive manufacturing build 110 from the separation station 152. In exemplary embodiments, the conveyor 210 comprises a sieve conveyor 210 having a number of openings or apertures 214 therein to enable unbound powder build material 114 to pass or fall therethrough and be collected by the hopper 212. In the illustrated embodiment, the conveyor 210 is configured to convey or transport the one or more objects 130 away from the separation station 152 as indication by a direction 216. The conveyor 210 may comprise a belt with the apertures 214, a series of spaced-apart rollers defining the apertures 214, or other type or conveying mechanism. In exemplary embodiments, the conveyor 210 comprises a vibratory or vibrating conveyor 210 such that vibrations are induced into the additive manufacturing build 110 by the conveyor 210 itself.

In the illustrated embodiment, the de-powdering station 154 also comprises one or more agitation mechanisms 220 to separate the unbound powder build material 114 from the one or more objects 130. For example, in the illustrated embodiment, the one or more agitation mechanisms 220 include one or more vibration mechanisms 222 proximate or coupled to the conveyor 210 at one or more locations along the conveyor 210. The one or more vibration mechanisms 222 may comprise one or more pneumatic or ultrasonic transducers to impart vibrations to the conveyor 210, which imparts vibrations to the one or more objects 130 and the unbound powder build material 114. Thus, while the portion 190 is transported along the conveyor 210, the vibrations imparted to the one or more objects 130 and the unbound powder build material 114 loosen and separate the unbound powder build material 114 from the one or more objects 130, and the unbound powder build material 114 falls through the conveyor 210 and is collected by the hopper 212. Additionally or alternatively, the one or more agitation mechanisms 220 may include one or more fluidization mechanisms 224. In exemplary embodiments, the one or more fluidization mechanisms 224 may comprise one or more nozzles or other types of fluid ejectors configured to direct a fluid toward the one or more objects 130 to separate the unbound powder build material 114 from the one or more objects 130 as the one or more objects are conveyed along the conveyor 210. Actuation and control of the one or more agitation mechanisms 220 may be automatically controlled by the controller 189 or another computing system configured similar to exemplary computing devices of the computing system 800 described below with reference to FIG. 8.

Thus, in operation, the portion 190 of the additive manufacturing build 110 is elevated upwardly out of the build box 104 and into the sleeve 170. The separation mechanism 200 separates the portion 190 from the portion 192 of the additive manufacturing build 110. In exemplary embodiments, the sleeve 170 may be moved by an actuator or other mechanism (not shown) in a direction 226 to move the portion 190 away from the separation station 152 and the portion 192 and onto the conveyor 210. Alternatively, after separation of the portion 190 from the portion 192, the sleeve 170 may be removed from the portion 190, and the portion 190 may itself be moved by an actuator or other mechanism (not shown) in the direction 226 to move the portion 190 away from the separation station 152 and the portion 192 and onto the conveyor 210. Alternatively, the sleeve 170 may remain on the portion 190 for part or all of the transported distance on the conveyor 210. Actuation and control of an actuator moving the sleeve 170 onto the conveyor 210, or removing the sleeve 170 from the portion 190, may be automatically controlled by the controller 189 or another computing system configured similar to exemplary computing devices of the computing system 800 described below with reference to FIG. 8. As illustrated in FIG. 2, as the one or more objects 130 travel or are conveyed along the conveyor 210 toward an end 228 of the conveyor 210, unbound powder build material 114 is gradually separated from the one or more objects 130 and collected by the hopper 212. The above procedure may then be repeated for additional portions of the additive manufacturing build 110 (e.g., the sleeve 170 (or an additional sleeve 170) may be returned to the separation station 152 to facilitate the separation of another portion of the additive manufacturing build 110).

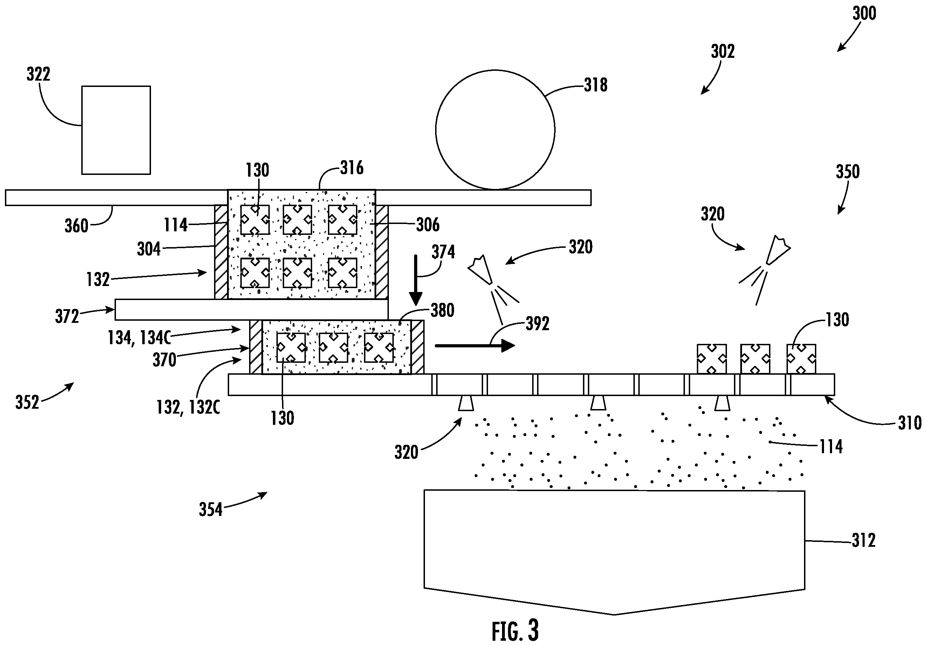

FIG. 3 is a schematic diagram depicting an exemplary additive manufacturing system 300 in accordance with another embodiment of the present disclosure. The additive manufacturing system 300 may be configured similarly as the additive manufacturing system 100 (FIG. 1) having one or more additive manufacturing machines 302. Accordingly, the one or more additive manufacturing machines 302 may be configured similarly to the one or more additive manufacturing machines 102 (FIG. 1). For example, the one or more additive manufacturing machines 102 may comprise a build box 304, a recoater 318, and one or more print heads 322 configured similarly as the respective build box 104 (FIG. 1), the recoater 118 (FIG. 1), and the one or more print heads 122 (FIG. 1). For example, the build box 304 supports an additive manufacturing build 306 comprising the one or more objects 130 disposed within the powder build material 114. A support structure 360 is configured to support the build box 304 within the additive manufacturing machine 302 during a printing process. The recoater 318 is movable to spread one or more layers of the powder build material 114 onto a build surface 316 within the build box 304. Although FIG. 3 is depicted and described in connection with a binder jet printing process, it should be understood that other types of additive manufacturing machines may be used such as, by way of non-limiting example, FDM, SLS, SLA, DSLS, EBS, EBM, LENS, LNSM, DMD, DLP, DSLM, SLM, DMLM, and other known processes.

In the illustrated embodiment, the additive manufacturing system 300 comprises an integrated, automated de-powdering system 350 according to embodiments of the present disclosure. The de-powdering system 350 may be configured similarly to the de-powdering system 150 (FIG. 2) having a separation station 352 and a de-powdering station 354. The de-powdering station 354 may be configured similarly to the de-powdering station 154 having a conveyor 310 configured as a sieve conveyor 310 (configured similarly to the conveyor 210 (FIG. 2)), one or more agitation mechanisms 320 (configured similarly to the one or more agitation mechanisms 220 (FIG. 2)), and a hopper 312 (configured similarly to the hopper 212 (FIG. 2).

**In** the illustrated embodiment, the separation station 352 is configured similarly to the separation station 152 (FIG. 2) having a support structure 360 supporting the build box 304, a sleeve 370 (configured similarly to the sleeve 170 (FIG. 2)) and a separation mechanism 372 (configured similarly to the separation mechanism 200 (FIG. 2)). **In** the embodiment illustrated in FIG. 3, the additive manufacturing build 110 is lowered in a direction 374 such that at least a portion 380 of the additive manufacturing build 110 is disposed within the sleeve 370. In exemplary embodiments, the portion 380 comprises at least one build layer 132C of the one or more build layers 132.

**In** exemplary embodiments, the separation mechanism 372 is positioned in alignment with at least a portion of a foundation layer 134C of the one or more foundation layers 134, or, alternatively, the additive manufacturing build 110 is lowered to place at least a portion of the foundation layer 134C in alignment with the separation mechanism 372. As described above, the separation mechanism 372 separates the portion 380 from a portion 390 of the additive manufacturing build 110 disposed above and exterior to the sleeve 370. The portion 380 is then conveyed away from the separation station 352 on the conveyor 310 in the direction 392 where the unbound powder build material 114 is separated from the one or more objects 130.

Thus, exemplary embodiments of the present disclosure enable the continuous separation and de-powdering of portions of an additive manufacturing build while the additive manufacturing build is being printed. For example, as the additive manufacturing build is incrementally lowered to accommodate additional layers of power build material being applied to the working surface and a binder being dispersed thereon to form or print additional layers of one or more the three-dimensional objects, portions of the additive manufacturing build containing completely printed objects may be concurrently separated and de-powdered.

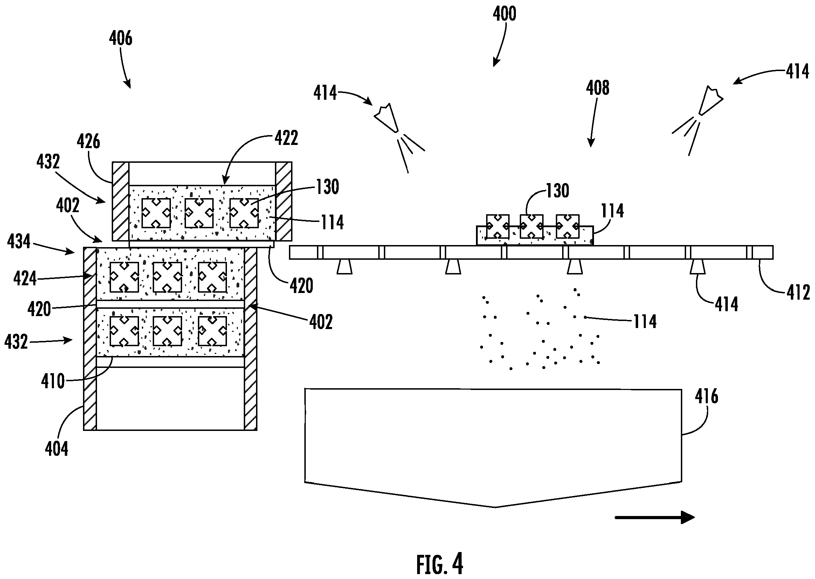

Referring to FIG. 4, FIG. 4 is a schematic diagram illustrating another embodiment of an automated de-powdering system 400 in accordance with embodiments of the present disclosure. The de-powdering system 400 may be configured similarly to the de-powdering system of FIG. 3 having a separation station 406 and a de-powdering station 408. In the illustrated embodiment, a build box 404 (configured similarly to the build box 104 (FIGS. 1 and 2) or the build box 304 (FIG. 3)) is configured to support an additive manufacturing build 410. The additive manufacturing build 410 may be configured similarly to the additive manufacturing build 110 (FIGS. 1-3). For example, the additive manufacturing build 410 includes one or more build layers 432 containing the one or more objects 130 (similar to the one or more build layers 132 (FIGS. 1-3)) and one or more foundation layers 434 being devoid of any of the one or more objects 130 (similar to the one or more foundation layers 134 (FIGS. 1-3)).

The de-powdering system 400 may be configured similarly to any of the de-powdering systems 150 (FIG. 2) or 350 (FIG. 3) with the de-powdering station 408 comprising a conveyor 412 configured as a sieve conveyor 412 (configured similarly to the conveyor 210 (FIG. 2) or the conveyor 310 (FIG. 3)), one or more agitation mechanisms 414 (configured similarly to the one or more agitation mechanisms 220 (FIG. 2) or the one or more agitation mechanisms 320 (FIG. 3)), and a hopper 416 (configured similarly to the hopper 212 (FIG. 2) or the hopper 312 (FIG. 3)). In the illustrated embodiment, the separation station 406 also comprises a separation mechanism 402 for separating portions of the additive manufacturing build 410. For example, in the illustrated embodiment, the separation mechanism 402 includes one or more dividers 420 disposed within the additive manufacturing build 410. In exemplary embodiments, the one or more dividers 420 are disposed within the additive manufacturing build 410 during the printing of the additive manufacturing build 410. For example, in exemplary embodiments, the one or more dividers 420 may be disposed between each build layer 432 (e.g., generally at a location of a foundation layer 134). However, it should be understood that multiple build layers 434 may be disposed between dividers 420 that are spaced vertically apart.

Thus, in the illustrated embodiment, at least a portion 422 of the additive manufacturing build 410 is pushed out of the build box 404 such that the portion 422 may be separated from at least a portion 424 of the additive manufacturing build 410 remaining within the build box 404. In exemplary embodiments, the additive manufacturing build 410 is pushed out of the build box 404 a sufficient amount to enable the portion 422 to be separated from the portion 424 at a location of one of the one or more dividers 420. In the illustrated embodiment, the portion 422 may be moved into a sleeve 426. The sleeve 426 may be configured similarly to the sleeve 170 (FIG. 2) or the sleeve 370 (FIG. 3). It should also be understood that with the dividers 420, stabilization of the portion 422 may be unnecessary such that the sleeve 426 may be optionally used. Similarly to as described above, the separated portion 422 is moved to the conveyor 412, and unbound powder build material 114 is separated from the one or more objects 130 as the portion 422 and the one or more objects 130 are transported along the conveyor 412.

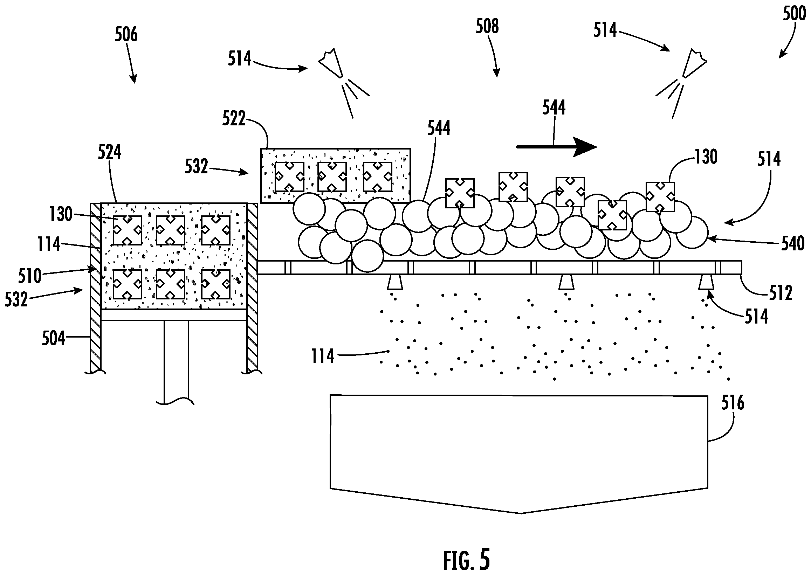

Referring to FIG. 5, FIG. 5 is a schematic diagram illustrating another embodiment of an automated de-powdering system 500 in accordance with embodiments of the present disclosure. The de-powdering system 500 may be configured similarly to any of the de-powdering systems 150 (FIG. 2), 350 (FIG. 3), or 400(FIG. 4) having a separation station 506 and a de-powdering station 508. The de-powdering station 508 comprises a conveyor 512 configured as a sieve conveyor 512 (configured similarly to the conveyor 210 (FIG. 2), the conveyor 310 (FIG. 3), or the conveyor 412 (FIG. 4)), one or more agitation mechanisms 514 (configured similarly to the one or more agitation mechanisms 220 (FIG. 2), the one or more agitation mechanisms 320 (FIG. 3), or the one or more agitation mechanisms 414 (FIG. 4)), and a hopper 516 (configured similarly to the hopper 212 (FIG. 2), the hopper 312 (FIG. 3), or the hopper 416 (FIG. 4)).

In the illustrated embodiment, a build box 504 (configured similarly to the build box 104 (FIGS. 1 and 2), the build box 304 (FIG. 3), or the build box 404 (FIG. 4)) is configured to support an additive manufacturing build 510. The additive manufacturing build 510 may be configured similarly to the additive manufacturing build 110 (FIGS. 1-3) or the additive manufacturing build 410 (FIG. 4). For example, the additive manufacturing build 510 includes one or more build layers 532 containing the one or more objects 130 (similar to the one or more build layers 132 (FIGS. 1-3) or the one or more build layers 432 (FIG. 4)) and one or more foundation layers 534 being devoid of any of the one or more objects 130 (similar to the one or more foundation layers 134 (FIGS. 1-3) or the one or more foundation layers 434 (FIG. 4)).

In the illustrated embodiment, at the separation station 506, at least a portion 522 of the additive manufacturing build 510 is pushed out of the build box 504 such that the portion 522 may be separated from at least a portion 524 of the additive manufacturing build 510 remaining within the build box 504. The portion 522 of the additive manufacturing build 510 may be separated from the remaining portion 524 using any of the separation mechanisms 200 (FIG. 2), 372 (FIG. 3), or 402 (FIG. 4). Although not depicted in FIG. 5, the portion 522 may be supported by a sleeve (e.g., similar to the sleeve 170 (FIG. 2), the sleeve 370 (FIG. 3), or the sleeve 426 (FIG. 5)) while the portion 522 is being separated from the remaining portion 524. The portion 522 is placed on the conveyor 512 and transported along the conveyor 512 where unbound powder build material 114 is separated from the one or more objects 130. In the illustrated embodiment, the one or more agitation mechanisms 514 further comprises an agitation media 540 disposed on or along the conveyor 512. For example, in the illustrated embodiment, the agitation media 540 comprises a tumbling media 542 having a spherical shape. However, it should be understood that other types of shapes of the tumbling media 542 may be used. The tumbling media 542 may comprise plastic, ceramic, or other types or materials.

In operation, the portion 522 is placed or deposited onto the agitation media 540. In exemplary embodiments, the conveyor 512 is configured to convey the portion 522 and at least a portion of the agitation media 540 in a direction 544. The vibratory action of the agitation media 540, alone or in combination with one or more other types of agitation mechanisms 514 (e.g., vibration mechanisms 222 (FIG. 2) and fluidization mechanisms 224 (FIG. 2)), separates the unbound powder build material 114 from the one or more objects 130 as the one or more objects 130 are transported along the conveyor 512.

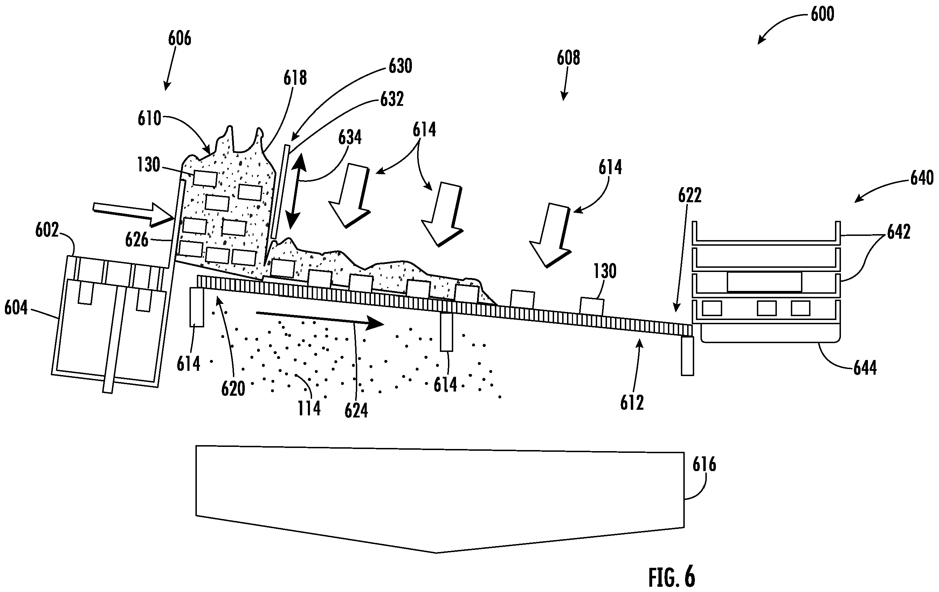

Referring to FIG. 6, FIG. 6 is a schematic diagram illustrating another embodiment of an automated de-powdering system 600 in accordance with embodiments of the present disclosure. The de-powdering system 600 may be configured similarly to any of the de-powdering systems 150 (FIG. 2), 350 (FIG. 3), 400(FIG. 4) or 500 (FIG. 5) having a separation station 606 (configured similarly to the separation station 152 (FIG. 2), the separation station 352 (FIG. 3), the separation station 406 (FIG. 4), or the separation station 506 (FIG. 5)), a conveyor 612 configured as a sieve conveyor 612 (configured similarly to the conveyor 210 (FIG. 2), the conveyor 310 (FIG. 3), the conveyor 412 (FIG. 4), or the conveyor 512 (FIG. 5)), one or more agitation mechanisms 614 (configured similarly to the one or more agitation mechanisms 220 (FIG. 2), the one or more agitation mechanisms 320 (FIG. 3), the one or more agitation mechanisms 414 (FIG. 4), or the one or more agitation mechanisms 514 (FIG. 5)), and a hopper 616 (configured similarly to the hopper 212 (FIG. 2), the hopper 312 (FIG. 3), the hopper 416 (FIG. 4) or the hopper 516 (FIG. 5)).

In the illustrated embodiment, a build box 604 (configured similarly to the build box 104 (FIGS. 1 and 2), the build box 304 (FIG. 3), the build box 404 (FIG. 4), or the build box 504 (FIG. 5)) is configured having a build plate 602 configured to support an additive manufacturing build 610. The additive manufacturing build 610 may be configured similarly to the additive manufacturing build 110 (FIGS. 1-3), the additive manufacturing build 410 (FIG. 4), or the additive manufacturing build 510 (FIG. 5). For example, the additive manufacturing build 610 includes the one or more objects 130 suspended or disposed within the powder build material 114.

The build plate 602 is vertically adjustable such that the build plate 602 is movable vertically to enable at least a portion 618 of the additive manufacturing build 610 to be moved from the build box 604 to the conveyor 612. In the illustrated embodiment, the separation station 606 includes a separation mechanism 626 configured to move the portion 618 of the additive manufacturing build 610 from the build box 604 to the conveyor 612. The separation mechanism 626 may comprise a scraper or other type of device configured to move the portion 618 of the additive manufacturing build 610 from the build box 604 to the conveyor 612. It should be understood that the separation mechanism 626 may also comprise one or more of the separation mechanisms 200 (FIG. 2), 372 (FIG. 3), or 402 (FIG. 4).

In exemplary embodiments, the conveyor 612 receives at least the portion 618 of the additive manufacturing build 610 from the separation station 606 and conveys the received portion 618 in a direction 624 for de-powdering. In the illustrated embodiment, the conveyor 612 is positioned at an angled or sloped orientation such that at least a portion of an upstream portion 620 of the conveyor 612 is disposed in a vertically elevated position relative to at least a portion of a downstream portion 622 of the conveyor 612. For example, in exemplary embodiments, the conveyor 612 may be positioned at an angled or sloped orientation of greater than zero degrees to thirty degrees from horizontal. In exemplary embodiments, the conveyor 612 may be positioned at an angled or sloped orientation of between five degrees to twenty-five degrees from horizontal. In the illustrated embodiment, the build box 604 is also disposed at an angled orientation corresponding to the angled orientation of the conveyor 612 to facilitate the transfer of the portion 618 to the conveyor 612. However, it should be understood that one or more of the conveyor 612 or the build box 604 may be positioned without such angular or sloped orientation. The one or more agitation mechanisms 614 function to remove the unbound powder build material 114 from the one or more objects 130 as the one or more objects 130 travel along the conveyor (e.g., by vibration, fluidization, media, or otherwise).

In the illustrated embodiment, the separation station 606 includes a dosing mechanism 630. The dosing mechanism 630 is configured to regulate an amount of the additive manufacturing build 610 that is transferred to the conveyor 612 from the separation station 606. For example, in exemplary embodiments, the dosing mechanism 630 comprises a wall 632 configured to be adjustable in at least the directions 634 (e.g., toward and away from the conveyor 612) to control or regulate an amount of the additive manufacturing build 610 that is transferred to the conveyor 612 from the separation station 606. The amount of the additive manufacturing build 610 transferred to the conveyor 612 may be regulated or controlled by the dosing mechanism 630 based on the amount of the additive manufacturing build 610 that may be processed or de-powdered by the de-powdering station 608 such as, by way or non-limiting example, the length of the conveyor 612, the screen size or size of the apertures in the sieve conveyor 612, or the intensity of vibrations imparted by the one or more agitation mechanisms 614.

In exemplary embodiments, the de-powdering system 600 also includes a sorting mechanism 640 located adjacent or proximate to the downstream portion 622 of the conveyor 612 and configured to receive the one or more objects 130 from the conveyor 612. In exemplary embodiments, the sorting mechanism 640 may comprise one or more racks 642 mountable on or coupled to a conveyor 644. The sorting mechanism 640 may be configured to position different racks 642 adjacent to the downstream portion 622 of the conveyor 612 based on the which of the one or more objects 130 have completed the de-powdering process for receiving such objects 130 from the conveyor 612. Alternatively or additionally, the objects 130 may be removed from the downstream portion 622 of the conveyor 612 and selectively placed onto select racks 642 for further processing.

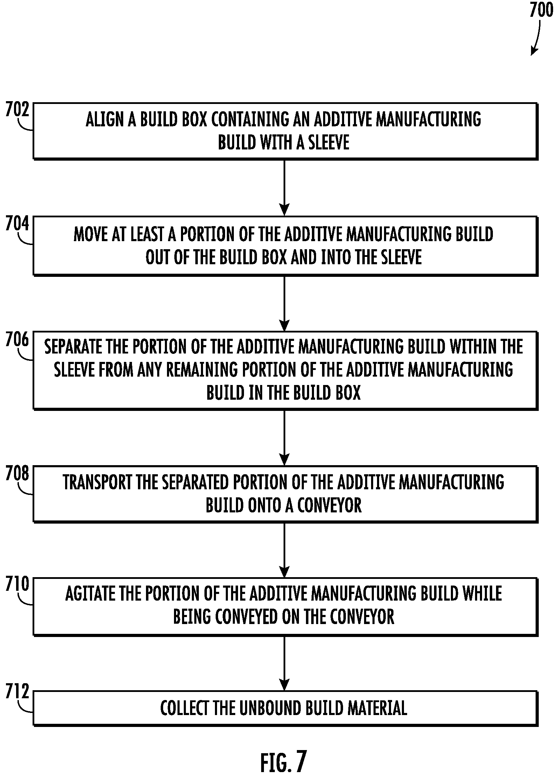

Referring to FIG. 7, a block diagram depicting an exemplary automated method 700 of de-powdering the additive manufacturing build 110 is provided. The method 700 begins at 702, where the build box 104 and the sleeve 170 are aligned with each other, or at least the additive manufacturing build 110 within the build box 104 is aligned with the sleeve 170. At 704, the build plate 140 is actuated to move at least the portion 190 of the additive manufacturing build 110 out of the build box 104 and into the sleeve 170. At 706, the separation mechanism 200 is actuated to separate the portion 190 from any remaining portion of the additive manufacturing build 110 remaining within the build box 104. In exemplary embodiments, at 706, the cutting blade 202 is inserted into the additive manufacturing build 110 to separate the portion 190 from any remaining portion of the additive manufacturing build 110 remaining within the build box 104. At 708, the separated portion 190 of the additive manufacturing build 110 is transported to the conveyor 210. In exemplary embodiments, the separated portion 190 may be moved onto the conveyor 210 within the sleeve 170, and the sleeve 170 may then be removed from the portion 190. At 710, the one or more agitation mechanisms 220 may be automatically actuated to separate unbound portions of the powder build material 114 from the one or more objects 130 of the portion 190 while the portion 190 is being conveyed on the conveyor 210. The conveyor 210 may be actuated to transport the portion 190 away from the separation station 152 after placement of the portion 190 onto the conveyor 210, or the conveyor 210 may be automatically controlled to stop or start movement, or move continuously, as portions of additive manufacturing build 110 are placed onto the conveyor 210. The unbound portions of the powder build material 114 is collected by the hopper 212 as the portion 190 travels along the conveyor 210.

FIG. 8 provides an example computing system 800 according to example embodiments of the present disclosure. The computing devices or elements described herein, such as the controller 189, may include various components and perform various functions of the computing system 800 described below, for example.

As shown in FIG. 8, the computing system 800 can include one or more computing device(s) 802. The computing device(s) 802 can include one or more processor(s) 802A and one or more memory device(s) 802B. The one or more processor(s) 802A can include any suitable processing device, such as a microprocessor, microcontroller, integrated circuit, logic device, and/or other suitable processing device. The one or more memory device(s) 802B can include one or more computer-executable or computer-readable media, including, but not limited to, non-transitory computer-readable media, RAM, ROM, hard drives, flash drives, and/or other memory devices.

The one or more memory device(s) 802B can store information accessible by the one or more processor(s) 802A, including computer-readable instructions 802C that can be executed by the one or more processor(s) 802A. The instructions 802C can be any set of instructions that when executed by the one or more processor(s) 802A, cause the one or more processor(s) 802A to perform operations. In some embodiments, the instructions 802C can be executed by the one or more processor(s) 802A to cause the one or more processor(s) 802A to perform operations, such as any of the operations and functions for which the computing system 800 and/or the computing device(s) 802 are configured, such as controlling operation or actuation of the actuator 188, the agitation mechanisms 220, movement of the conveyor 210, or other components of the automated de-powdering systems 150, 350, 400, 500, and 600. The instructions 802C can be software written in any suitable programming language or can be implemented in hardware. Additionally, and/or alternatively, the instructions 802C can be executed in logically and/or virtually separate threads on processor(s) 802A. The memory device(s) 802B can further store data 802D that can be accessed by the processor(s) 802A. For example, the data 802D can include models, lookup tables, databases, etc.

The computing device(s) 802 can also include a network interface 802E used to communicate, for example, with the other components of the computing system 800 (e.g., via a communication network). The network interface 802E can include any suitable components for interfacing with one or more network(s), including for example, transmitters, receivers, ports, controllers, antennas, and/or other suitable components. One or more devices can be configured to receive one or more commands from the computing device(s) 802 or provide one or more commands to the computing device(s) 802.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Thus, the de-powdering apparatus of embodiments of the present disclosure includes a separation station where at least a portion of an additive manufacturing build is moved out of a build box and separated from a remaining portion of the additive manufacturing build within the build box. A sleeve may be used to stabilize the additive manufacturing build during the separation process. The separated portion of the additive manufacturing build is transported along a sieve conveyor while one or more agitation mechanisms function to separate unbound powder build material from the three-dimensional object. Thus, exemplary embodiments of the present disclosure decrease the time required for de-powdering (e.g., compared to de-powdering performed manually) and can accommodate complex build orientations and objects. Embodiments of the de-powdering apparatus may also be integrated into an additive manufacturing machine such that portions of an additive manufacturing build may be separated and de-powdered during a printing process (e.g., while a remaining portion of the additive manufacturing build is being printed).

Further aspects of the presently disclosed subject matter are provided by the following clauses:
An automated de-powdering system, comprising: a separation station comprising: a support structure configured to support a build box containing an additive manufacturing build, wherein the additive manufacturing build includes one or more objects disposed within a powder build material; an actuator configured to move at least a first portion of the additive manufacturing build out of the build box and into a sleeve; and a separation mechanism configured to separate the first portion of the additive manufacturing build within the sleeve from a remaining portion of the additive manufacturing build; and a de-powdering station comprising: a conveyor configured to convey the first portion of the additive manufacturing build away from the separation station; and an agitation mechanism configured to separate unbound powder build material from the one or more objects while the first portion of the additive manufacturing build is being conveyed by the conveyor.

The automated de-powdering system of the preceding clause, wherein the separation mechanism comprises a cutting blade.

The automated de-powdering system of any preceding clause, wherein the separation mechanism comprises a divider placed within the additive manufacturing build.

The automated de-powdering system of any preceding clause, wherein the additive manufacturing build comprises one or more build layers containing the one or more objects disposed within the powder build material, and wherein the additive manufacturing build comprises one or more foundation layers including the powder build material devoid of any of the one or more objects, and wherein the separation mechanism is configured to separate the first portion of the manufacturing build from the remaining portion of the manufacturing build at at least one of the one or more foundation layers.

The automated de-powdering system of any preceding clause, wherein the agitation mechanism comprises at least one of a vibration mechanism, a fluidization mechanism, or an agitation media.

The automated de-powdering system of any preceding clause, further comprising a hopper disposed below the conveyor to collect the unbound powder build material.

The automated de-powdering system of any preceding clause, wherein the conveyor comprises a sieve conveyor.

The automated de-powdering system of any preceding clause, further comprising a dosing mechanism configured to control an amount of the first portion transferred to the conveyor.

The automated de-powdering system of any preceding clause, wherein the conveyor is disposed at a non-horizontal orientation.

An automated de-powdering method, comprising: securing a build box to a support structure, wherein the build box comprises a build plate supporting an additive manufacturing build having one or more objects disposed within a powder build material; moving the build plate to move a first portion of the additive manufacturing build out of the build box and into a sleeve; separating the first portion of the additive manufacturing build within the sleeve from a remaining portion of the additive manufacturing build; transporting the first portion of the additive manufacturing build away from the remaining portion of the additive manufacturing build on a conveyor; and agitating the first portion of the additive manufacturing build while the first portion is being conveyed on the conveyor to separate unbound powder build material from the one or more objects.

The automated de-powdering method of any preceding clause, wherein separating the first portion of the additive manufacturing build within the sleeve from the remaining portion of the additive manufacturing build comprises cutting or slicing the additive manufacturing build.

The automated de-powdering method of any preceding clause, wherein agitating the first portion comprises using at least one of a vibration mechanism, a fluidization mechanism, or an agitation media.

The automated de-powdering method of any preceding clause, wherein the additive manufacturing build comprises one or more build layers containing the one or more objects disposed within the powder build material, and wherein the additive manufacturing build comprises one or more foundation layers including the powder build material devoid of any of the one or more objects, and further comprising separating the first portion of the manufacturing build from the remaining portion of the manufacturing build at at least one of the one or more foundation layers.

The automated de-powdering method of any preceding clause, wherein the additive manufacturing build comprises one or more dividers placed within the additive manufacturing build during a printing process, and further comprising separating the first portion of the additive manufacturing build within the sleeve from the remaining portion of the additive manufacturing build at at least one of the one or more dividers.

The automated de-powdering method of any preceding clause, further comprising conveying the first portion of the additive manufacturing build away from the remaining portion of the additive manufacturing build via a sieve conveyor.

The automated de-powdering method of any preceding clause, further comprising collecting the unbound powder build material separated from the one or more objects.

An additive manufacturing system, comprising: a build box comprising a plurality of sidewalls and a build plate, the build box defining a build chamber for an additive manufacturing build; a powder source configured to deposit one or more layers of a powder build material onto a build surface within the build box; a print system configured to transform at least a portion of the one or more layers of the powder build material to form one or more objects of the additive manufacturing build; an actuator configured to move the build plate to position at least a first portion of the additive manufacturing build into a sleeve; a separation mechanism configured to separate the first portion of the additive manufacturing build from a remaining portion of the additive manufacturing build; a conveyor configured to convey the first portion of the additive manufacturing build away from the remaining portion of the additive manufacturing build; and an agitation mechanism configured to separate unbound powder build material from the one or more objects while the first portion of the additive manufacturing build is being conveyed by the conveyor.

The additive manufacturing system of any preceding clause, wherein the separation mechanism configured to separate the first portion of the additive manufacturing build while at least one of the powder source is depositing the one or more layers of the powder build material or the print system is forming the one or more objects from the one or more layers of the powder build material.

The additive manufacturing system of any preceding clause, wherein the conveyor comprises a sieve conveyor.

The additive manufacturing system of any preceding clause, wherein the agitation mechanism comprises at least one of a vibration mechanism, a fluidization mechanism, or an agitation media.

The additive manufacturing system of any preceding clause, wherein the separation mechanism comprises a cutting blade.

The additive manufacturing system of any preceding clause, wherein the separation mechanism comprises a divider placed within the additive manufacturing build.

This written description uses examples to describe the presently disclosed subject matter, including the best mode, and also to enable any person skilled in the art to practice such subject matter, including making and using any devices or systems and performing any incorporated methods. The patentable scope of the presently disclosed subject matter is defined by the claims, and may include other examples that occur to those skilled in the art. The scope of the claims encompasses such other examples that include structural elements that do not differ from the literal language of the claims or that have insubstantial differences from the literal languages of the claims.

## Claims

1. An automated de-powdering system, comprising:
a separation station comprising:
a support structure configured to support a build box containing an additive manufacturing build, wherein the additive manufacturing build includes one or more objects disposed within a powder build material;
an actuator actuatable to move at least a first portion of the additive manufacturing build out of the build box and into a sleeve; and
a separation mechanism actuatable to separate the first portion of the additive manufacturing build within the sleeve from a remaining portion of the additive manufacturing build; and
a de-powdering station comprising:
a conveyor configured to convey the first portion of the additive manufacturing build away from the separation station; and
an agitation mechanism actuatable to separate at least a portion of the powder build material from the one or more objects while the first portion of the additive manufacturing build is being conveyed by the conveyor.

2. The automated de-powdering system of claim 1, wherein the separation mechanism comprises a cutting blade.

3. The automated de-powdering system of claim 1, wherein the separation mechanism comprises a divider placed within the additive manufacturing build.

4. The automated de-powdering system of claim 1, wherein the additive manufacturing build comprises one or more build layers containing the one or more objects disposed within the powder build material, and wherein the additive manufacturing build comprises one or more foundation layers including the powder build material devoid of any of the one or more objects, and wherein the separation mechanism is configured to separate the first portion of the manufacturing build from the remaining portion of the manufacturing build at at least one of the one or more foundation layers.

5. The automated de-powdering system of claim 1, wherein the agitation mechanism comprises at least one of a vibration mechanism, a fluidization mechanism, or an agitation media.

6. The automated de-powdering system of claim 1, further comprising a hopper disposed below the conveyor to collect the powder build material separated from the one or more objects.

7. The automated de-powdering system of claim 1, wherein the conveyor comprises a sieve conveyor.

8. An automated de-powdering method, comprising:
moving a build plate to move a first portion of an additive manufacturing build out of a build box and into a sleeve;
separating the first portion of an additive manufacturing build within the sleeve from a remaining portion of the additive manufacturing build;
transporting the first portion of the additive manufacturing build away from the remaining portion of the additive manufacturing build on a conveyor; and
agitating the first portion of the additive manufacturing build while the first portion is being conveyed on the conveyor to separate unbound powder build material from one or more objects disposed within the powder build material.

9. The automated de-powdering method of claim 8, wherein separating the first portion of the additive manufacturing build within the sleeve from the remaining portion of the additive manufacturing build comprises cutting or slicing the additive manufacturing build.

10. The automated de-powdering method of claim 8, wherein agitating the first portion comprises using at least one of a vibration mechanism, a fluidization mechanism, or an agitation media.

11. The automated de-powdering method of claim 8, wherein the additive manufacturing build comprises one or more build layers containing the one or more objects disposed within the powder build material, and wherein the additive manufacturing build comprises one or more foundation layers including the powder build material devoid of any of the one or more objects, and further comprising separating the first portion of the manufacturing build from the remaining portion of the manufacturing build at at least one of the one or more foundation layers.

12. The automated de-powdering method of claim 8, wherein the additive manufacturing build comprises one or more dividers placed within the additive manufacturing build during a printing process, and further comprising separating the first portion of the additive manufacturing build within the sleeve from the remaining portion of the additive manufacturing build at at least one of the one or more dividers.

13. The automated de-powdering method of claim 8, further comprising conveying the first portion of the additive manufacturing build away from the remaining portion of the additive manufacturing build via a sieve conveyor.

14. The automated de-powdering method of claim 8, further comprising collecting the unbound powder build material separated from the one or more objects.

15. An additive manufacturing system, comprising:
a build box comprising a plurality of sidewalls and a build plate, the build box defining a build chamber for an additive manufacturing build;
a powder source configured to deposit one or more layers of a powder build material onto a build surface within the build box;
a print system configured to transform at least a portion of the one or more layers of the powder build material to form one or more objects of the additive manufacturing build;
an actuator configured to move the build plate to position at least a first portion of the additive manufacturing build into a sleeve;
a separation mechanism configured to separate the first portion of the additive manufacturing build from a remaining portion of the additive manufacturing build;
a conveyor configured to convey the first portion of the additive manufacturing build away from the remaining portion of the additive manufacturing build; and
an agitation mechanism configured to separate unbound powder build material from the one or more objects while the first portion of the additive manufacturing build is being conveyed by the conveyor.
